# EUROPEAN PATENT APPLICATION

(11) **EP 4 663 945 A1**
(43) Date of publication of application: **17.12.2025**
(21) Application number: 23921001.6
(22) Date of filing: 06.02.2023
(51) Int. Cl.: F03G 7/00, F03G 7/06

(54) **POWER GENERATION DEVICE**

(71) Applicant: Taira, Tokuhiro, Okinawa-shi, Okinawa 904-2153 (JP)
(72) Inventor: Taira, Tokuhiro, Okinawa-shi, Okinawa 904-2153 (JP)
(74) Representative: Diaz Nunez, Joaquin
(86) International application number: PCT/JP2023/003764
(87) International publication number: WO 2024/166164

(57) **Abstract**

This invention generates power stably and continuously by expansion/contraction deformation of a coil spring formed from a shape-memory alloy.In this power generation device, a first partition wall 4 is provided in a sealed tank 1 so as to be capable of reciprocating. In the sealed tank 1, a first coil spring 2 and a second coil spring 3 are provided with the first partition wall 4 therebetween. Each of the coil springs 2 and 3 expansion-deforms when heated to a temperature equal to or higher than a threshold temperature T, and weakens when cooled to a temperature lower than the threshold temperature T. A looped belt 16 is connected to the first partition wall 4, and a rotary transmission mechanism 17 provided on a rotor rotation shaft 23 of a generator 20 is linked to the looped belt 16. The reciprocal movement of the looped belt 16 generated by alternately performing the expansion deformation and weakening of the first coil spring 2 and the second coil spring 3 is converted into rotation of the rotation shaft 23 in one direction by means of the rotary transmission mechanism 17, whereby continuous power generation by the generator 20 is performed.

## Description

### Technical Field

The present invention relates to a in which a coil spring formed from a shape memory alloy is attached to the left and right of a wall along one wall of a partition wall provided in a box-shaped space, and the combination of expansion and contraction of the coil spring and other members enables power generation.

### Technical Background

Preventing global warming is now a common challenge for all mankind. To solve this problem, the whole world is working on the issue of reducing greenhouse gas emissions. The Japanese government has also declared that it will aim to achieve real greenhouse gas emissions by 2050. Therefore, for the time being, we have set a goal to reduce the consumption of fossil fuels that are emitting Master 2. Power generation devices that use natural energy such as wind, solar, geothermal, hydropower, and ocean currents have been presented as a solution. Among them, solar power generation through the use of solar power is gaining momentum. It is a power generation device using a shape memory alloy spring that has been presented as artificial power generation due to the expansion and contraction of springs, etc. while being small for those power generation devices that use natural energy. For example, Japanese Patent Laid-Open No. 2009 - 243456 (Patent Literature 1) is a power generation device by expansion and contraction of a shape memory alloy spring using external air temperature.

### Prior art documents

Patent Literature 1: Japanese Patent Laid-Open No. 2009 - 243456

### Summary

### [Technical Problem]

The above Patent Document 1 relates to a power generation device that utilizes the expansion and contraction of a shape memory alloy spring, but the expansion and contraction is a so-called method of expansion and contraction of the use of outside air temperature based on solar heat, temperature differences between inside and outside the house, underground heat, heat energy and exhaust gas existing in nature. This is an external method of temperature control, and the idea of temperature control is not found there. If the stretching factor of the shape memory alloy spring is the temperature difference, since the above-mentioned temperature utilization is left to the use of temperature, there is a risk that the temperature instability will be distorted in its utilization and the fundamental defect of lacking stability in the stretching of the shape memory alloy spring will occur.

Furthermore, in the power generation apparatus of Patent Document 1, a single shape memory alloy spring mounted on the inner mandrel is elongated and deformed so that the pinion gear rotates and generates power. The power generating apparatus of Patent Document 1 is equipped with only one shape memory alloy spring, so even if the pinion gear can be actively rotated to generate power when the spring is extended and deformed, the elongated and deformed spring does not actively shrink and deform itself even if it is cooled below the fighting temperature, so the pinion gear cannot be actively rotated and adjusted. That is, there is a disadvantage that the power can only be generated during the elongation and deformation of the shape memory alloy spring, and the generator cannot be driven stably and continuously. In addition, since the temperature control of the shape memory alloy spring depends on the outside temperature, etc., the deformation of this spring cannot be properly adjusted, and thus there is a disadvantage that stable and continuous power generation cannot be achieved.

In addition, the biggest challenge in utilizing the shape memory alloy spring is to suppress the occurrence of the distortion, because the use effect of the shape memory alloy spring is reduced due to the distortion in the expansion and contraction of the shape memory alloy spring. The main cause of distortion in the shape memory alloy spring is excessive stretching or shrinking in its stretching and shrinking. Let this be the distortion of (1). Next is the deflection when the shape memory alloy spring extends. The longer the length, the more likely the spring is to deflect, and the deflection caused by this deflection is taken as the deflection of (2). Third, the distortion caused by the shape memory alloy spring not stretching and shrinking in a timely manner due to the relationship between temperature is taken as the distortion in (3). The power generation apparatus of Patent Document 1 has taken no measures to suppress the occurrence of distortion in (1) to (3) above, and thus has the disadvantage that the characteristics of the shape memory alloy spring cannot be used efficiently. It is also pointed out that the repeated life of each coil spring consisting of a shape memory alloy is shortened.

### Solution to Problem

The invention according to Claim 1 of the present application relates to a power generation device capable of generating electricity by driving the rotating shaft of a generator, comprising: a first partition wall provided so as to be capable of reciprocating movement within a sealed tank having an internal space;
a first coil spring made of a shape memory alloy, one end being fixed to the inner wall of the sealed tank, and the other being connected to the first partition wall, wherein the spring extends and deforms when heated above a predetermined threshold temperature and weakens when cooled below said threshold temperature;
a second coil spring, located coaxially on the opposite side of the first coil spring across the first partition wall, also made of a shape memory alloy, one end being fixed to the inner wall of the sealed tank, and the other being connected to the first partition wall, wherein the spring extends and deforms when heated above the threshold temperature and weakens when cooled below it;
a reciprocating means connected to the first partition wall, which reciprocates in conjunction with the reciprocating movement of the first partition wall;
a rotation transmission mechanism that links the reciprocating means to a rotating shaft and converts the reciprocating movement of the reciprocating means into unidirectional rotation of the rotating shaft;
Within the sealed tank:
   a first partition wall that reciprocates between a first and a second position;
   a second partition wall fixed to the first partition wall, which reciprocates between the first and second positions along the direction in which the coil springs extend;
   a third partition wall, located on the opposite side of the second partition wall across the coil springs, which also reciprocates between the first and second positions along the direction of the coil springs;
   The first through third partition walls divide the interior of the sealed tank into a first space maintained at a temperature below the threshold temperature, and a second space maintained at a temperature above the threshold temperature.
As the first coil spring extends and deforms while the second coil spring weakens and compresses, the first and second partition walls move from the first position to the second position, while the third partition wall moves from the second position to the first position. The deformed first coil spring is cooled in the first space, and the weakened and compressed second coil spring is heated in the second space.
As the second coil spring then extends and deforms while the first coil spring weakens and compresses, the first and second partition walls move back to the first position, and the third partition wall returns to the second position. The deformed second coil spring is positioned in the first space, and the weakened and compressed first coil spring is in the second space.
By alternating these operations-extension/deformation and weakening/compression-of the first and second coil springs, the first partition wall slides back and forth between the first and second positions, thereby causing the reciprocating means to reciprocate. This reciprocating movement is converted by the rotation transmission mechanism into continuous unidirectional rotation of the rotating shaft, enabling continuous power generation by the generator.
According to the invention of Claim 1, by placing the first coil spring made of a shape memory alloy in the second space and heating it above the threshold temperature while placing the second coil spring in the first space and cooling it below the threshold temperature-and vice versa-the reciprocating means is actuated by the reciprocating motion of the first partition wall, which is then converted into continuous unidirectional rotation through the rotation transmission mechanism, thus enabling the generator to be continuously rotated and generate power stably and continuously.

. The invention according to Claim 2 of the present application provides:
in the first space, a first temperature control means for maintaining the air below the threshold temperature and a ceiling fan for forced circulation;
in the second space, a second temperature control means for maintaining the air above the threshold temperature and a floor-mounted fan for forced circulation.
The sliding directions of the first and second partition walls and the third partition wall are configured to be opposite to each other.
When the second partition wall is in the first position, it is located on the first space side of the first coil spring, placing the first coil spring in the second space.
When the third partition wall is in the second position, it is located on the second space side of the second coil spring, placing the second coil spring in the first space.
When the second partition wall is in the second position, it is located on the first space side of the second coil spring, placing the second coil spring in the second space.
When the third partition wall is in the first position, it is located on the second space side of the first coil spring, placing the first coil spring in the first space.
According to the invention of Claim 2, since the first temperature control means and the ceiling fan keep the air in the first space below the threshold temperature, the coil springs located in that space can be adequately cooled.
Likewise, the second temperature control means and the table fan maintain the air in the second space above the threshold temperature, enabling the coil springs located there to be properly heated.
This allows the temperature control of the shape memory alloy coil springs to be carried out accurately, enabling proper reciprocating motion of the first partition wall and the reciprocating means.
As a result, the generator can be driven stably and continuously.

The invention according to Claim 3 of the present application provides:
A rotation transmission mechanism wherein:
a first rotating body is rotatably mounted relative to a rotating shaft and is linked to the reciprocating means;
a second rotating body is fixed directly to the rotating shaft adjacent to the first rotating body and rotates integrally with the shaft;
a pinion gear is movably mounted on the first rotating body and can rotate while moving;
a concave portion is provided on the second rotating body into which the pinion gear can fit when the reciprocating means moves in the first direction;
a rack gear is provided on the second rotating body, with which the pinion gear meshes when the reciprocating means moves in the second direction.

When the reciprocating means moves in the first direction, the pinion gear fits into the concave portion, causing the second rotating body to rotate in the same first direction as the first rotating body.

When the reciprocating means moves in the second direction, the pinion gear, meshing with the rack gear, generates rotational inertia force, which continues to rotate the second rotating body in the first direction.

According to the invention of Claim 3, when the reciprocating means moves in the first direction, the second rotating body rotates in the same first direction as the first rotating body; and when the reciprocating means moves in the second direction, the rotational inertia force of the pinion gear also causes the second rotating body to rotate in the same direction.
Thus, the second rotating body, which is fixed to the rotating shaft, continuously rotates in one direction, enabling the generator to continuously generate electricity.

According to the power generation apparatus of the present invention, the expansion and contraction of the coil spring consisting of the shape memory alloy can generate power stably and continuously, and efficient power generation can be performed. It is also expected that the repeated life of each coil spring consisting of a shape memory alloy will be increased.

### Brief Description of the Drawings

FIG. 1 is an overall configuration diagram of a power generation apparatus according to an embodiment of the present invention.
FIG. 2 is a perspective view of a rotary transmission mechanism;
FIG. 3 is a diagram illustrating the operating state of the rotary transmission mechanism of FIG. 2, wherein (a) shows a situation in which the first rotary body rotates in a first direction, and (b) shows a situation in which the first rotary body rotates in a second direction opposite to the first direction.
[Figure 4] (a) is a rear view of the rotary transmission from behind, and (b) is a drawing of the rotary transmission from a direction perpendicular to the axial direction of the rotor axis of rotation.
[Figure 5] (a) is a diagram illustrating a state in which the second coil spring expands and deforms and the first coil spring is weakened and compressed by the second coil spring, and (b) is a diagram illustrating a state in which the first coil spring expands and deforms and the second coil spring is weakened and compressed and compressed by the first coil spring.
[Figure 6] is a cross-sectional view showing the form in which the first to third partition walls insert into the grooves of the front wall and the rear wall of the sealing tank and move.
[Figure 7] (a) is a partially planar cross-sectional view of the sealed groove broken at the right position of the first partition wall; and (b) is a partially cross-sectional view of the sealed groove broken at the X-ray position of (a).
FIG. 8 is a diagram illustrating the configuration of a modified example of a rotary transmission mechanism, wherein (a) is a diagram viewed from a second rotary body side, (b) is a diagram viewed from a first rotary body side, and (c) is a diagram viewed from a left side.

### Detailed description

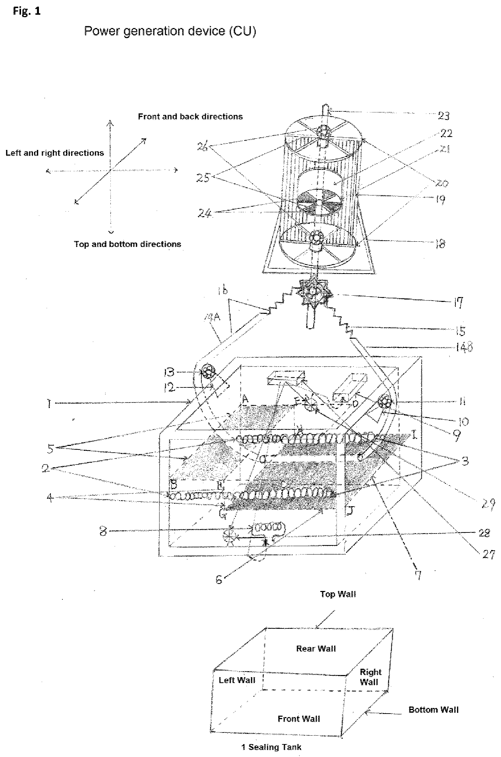

The power generation apparatus of the present invention will now be described with reference to the drawings. In the following example, the left and right directions in FIG. 1 are taken as the "left and right directions" of the power generation device CU, the direction orthogonal to the horizontal direction and the left and right directions are taken as the "front and back directions", and the direction orthogonal to the left and right directions and the front and back directions are taken as the "top and bottom directions". Also, the size/dimension of each member illustrated in the following description is by way of example only and is not limited thereto.

### Exemplification

FIG. 1 is a diagram illustrating the overall configuration of a power generation device CU of the present invention. The power generator C U is composed of a first partition wall 4 that is movable reciprocally in a sealed tank 1 with a space formed therein, and a shape memory alloy that is fixed to the inner wall of the sealed tank 1 at one end and connected to the first partition wall 4 at the other end, and expands and deforms when heated above a predetermined fighting temperature T, and weakens when cooled below the fighting temperature T. the first coil spring 2 and the second coil spring 3, which is located opposite the first coil spring 2 between the first partition wall 4, and consists of a shape memory alloy that is fixed to the inner wall of the sealing tank 1 at one end and connected to the first partition wall 4 at the other end, stretches and deforms when heated above a predetermined fighting temperature T, and weakens when cooled below the fighting temperature T. A loop belt (reciprocating means of travel) 16 coupled to the wall 4 and reciprocating with the reciprocating movement of the first partition wall 4, and a rotation transmission mechanism 17 in which the loop belt 16 and the rotor rotation axis (rotation axis) 23 are interlocked to convert the reciprocating movement of the loop belt 16 into rotation of the rotor rotation axis 23 in one direction. This causes the power generator CU to alternately execute the elongation deformation of the first coil spring 2 and the weakening of the second coil spring 3, and the elongation deformation of the first coil spring 2 and the second coil spring 3, so that the first partition wall 4 is reciprocated and the loop belt 16 is reciprocated in conjunction with the reciprocation of the first partition wall 4, and the rotary transmission mechanism 17 continuously rotates the rotor rotation axis 23 in the same direction to execute power generation by the generator 20.

In other words, the power generation device CU of FIG. 1 has a first coil spring 2 and a second coil spring 3 made of shape memory alloy attached to each of the left and right sides of a single wall, the first partition wall 4, as a boundary, inside the sealed tank 1. These first coil springs 2 and second coil springs 3 are powered from a storage battery (battery) 27 installed on the top surface of the top wall of the sealed tank 1, so that elongation deformation and weakening occur alternately by a compact high-performance electrothermal heater (second temperature control means) 8, an ultra-compact high-performance chiller (first temperature control means) 9, and a floor fan 28, ceiling fan 29. For example, when the contracted first coil spring 2 on the left side is warmed and extended to the right, the extended second coil spring 3 on the right side is compressed and contracted into the extending first shape memory alloy coil spring 2 because it is cooled and weakened. Also, when the right collapsed second coil spring 3 is warmed and extended to the left, the extended left first coil spring 2 is cooled and weakened, so that it is compressed and collapsed into the extending second coil spring 3. Each of these coil springs 2, 3 is configured to repeat a series of telescopic operations, ultimately rotating the rotor rotary shaft 23 continuously to power generation by the generator 20.

### (About sealed tank 1)

First, it will be described from the box of the rectangular body of the sealed tank 1 in Fig. 1. The sealed groove 1 is compartmented in the first space R1 and the second space R2 by a first partition wall 4 slidably movable in the sealed groove 1, a second partition wall 5 fixed to the first partition wall 4 and slidably movable in the sealed groove 1, and a third partition wall 6 slidably movably movable in the sealed groove 1 and in contact with the first partition wall 4. The sealed tank 1 is a cuboid insulated hollow box consisting of a front wall, a rear wall, a left wall, a right wall, an upper wall and a lower wall, and the size and material can be arbitrarily selected, but for the time being, each wall is a box with a thickness of 3 cm made of super-strong synthetic resin. For the sake of explanation, the volume shall be, for example, vertical (vertical width) 25 c m,
horizontal (left and right width) 41,6 c m, and depth (front and back width) 24 c m, in accordance with the length that extends to the max of the shape memory alloy spring. In the inner part of the sealed tank 1, a first partition wall 4 (for example, 3 cm longitudinal, 3 cm horizontal, and 24 cm deep) dividing the inner part of the sealed tank 1 into two regions is provided. With this first partition wall 4 as the boundary, a region is created in which the first coil spring 2 and the second coil spring 3 expand and contract to the left and right. These first coil springs 2 and second coil springs 3 are attached to one of the same number of coil springs in the same horizontal position to the left and right of the first partition wall 4, and the other is attached to the left wall or the right wall in the same horizontal position in the interior of the sealing groove 1 so as to face the respective coil springs previously attached.

### (For each guide groove 60, 61, 6 2)

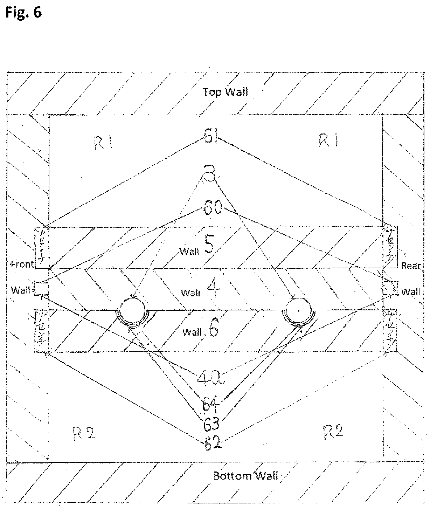

In the sealing groove 1, as shown in Fig. 6, the first to third guide grooves 60, 61, 62 are formed in a state in which they extend horizontally in the left and right directions on the inner wall surfaces of the front wall and the rear wall facing in the front and rear directions. In the first guide groove 60 formed in the front wall, the protrusions 4 formed in the front end of the first partition wall 4 fit almost without a gap, and in the first guide groove 60 formed in the rear wall, the protrusions 4a formed in the rear end of the first partition wall 4 fit almost without a gap. In other words, the first guide grooves 60, 60 realize stable reciprocal slide movement in the left and right directions of the first partition wall 4 in which each protrusions 4a, 4a of the front end and the rear end are engaged. In the second guide groove 61 formed in the front wall, the front end of the second partition wall 5 fits almost without a gap, and in the second guide groove 61 formed in the rear wall, the rear end of the second partition wall 5 fits without a gap. That is, the second guide grooves 61, 61 realize stable reciprocal slide movement in the left and right directions of the second partition wall 5 with the front and rear ends engaged. In the third guide groove 6 2 formed in the front wall, the front end of the third partition wall 6 fits almost without a gap, and in the second guide groove 6 2 formed in the rear wall, the rear end of the third partition wall 6 fits almost without a gap. That is, the third guide grooves 6 2, 62 achieve stable reciprocal slide movement in the left and right directions of the third partition wall 6 with the front and rear ends engaged. Note that the first to third guide grooves 60, 61, 62 have a depth of 1.0 cm from the inner surface of the front wall or the back wall.

### (About the coil spring)

The first coil spring 2 and the second coil spring 3 are coil springs formed from a shape memory alloy. For the first coil spring 2 and the second coil spring 3, for example, the wire diameter is 1.2 mm, the outer diameter of the coil spring is 20 mm, the total number of windings is 30, and the shear distortion is 1.0%. The first coil spring 2 and the second coil spring 3 are in the most contracted state (the length of the first coil spring 2 and the second coil spring 3 in this state is, for example, 3.6 cm). From this, the state in which the first coil spring 2 and the second coil spring 3 in this state are stretched the most rapidly when they reach a predetermined temperature (bucket temperature T) at which the generating force is heated and intensified (the length of the first coil spring 2 and the second coil spring 3 in this state is, for example, 35 cm). , and when cooled and cooled below a predetermined temperature (battle temperature T), it is set to a characteristic that the generating force is extremely weakened and weakened. As defined in this application, "weakening" means that if the shape memory alloy constituting the first coil spring 2 and the second coil spring 3 is cooled to a temperature below a predetermined fighting temperature T (a temperature lower than the fighting temperature T), as a characteristic of this shape memory alloy, it does not actively shrink and deform itself, and if a force is applied from the axial direction to the spring, it is compressed almost without resistance.

The example illustrates a case where a pair of first coil springs 2 and second coil springs 3 extending in the left and right direction of the power generation device C U and arranged in series in the left and right direction are provided with two pairs of first coil springs 2 and second coil springs 3 spaced in the front and back direction, as shown in FIG. 1. However, the number of pairs of the first coil spring 2 and the second coil spring 3 may be one pair or more than three pairs.

### (For shape memory alloys)

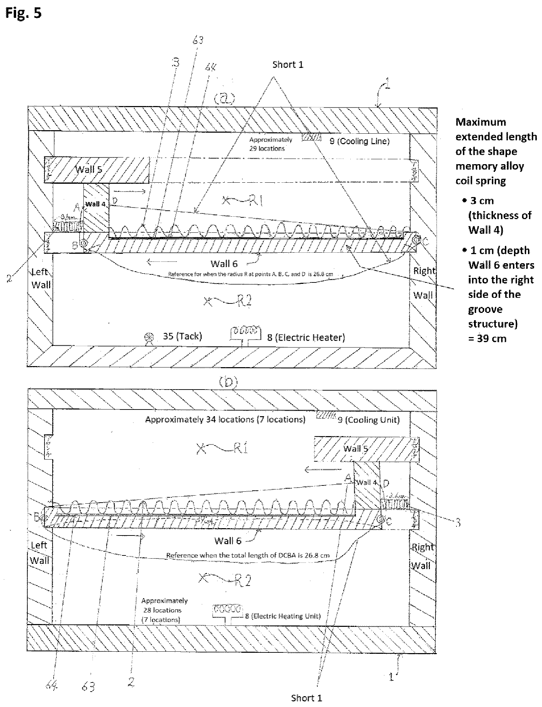

The shape memory alloy forming the first coil spring 2 and the second coil spring 3 of the example has the following physical properties and characteristics: This shape memory alloy is a shape memory alloy consisting of Ti (titanium) and Ni (nickel), and has physical properties that are warmed, stretched, cooled, and weakened. Then, in the shape memory alloy of the example, the operation completion temperature (Af point) at the time of heating is set to 35°C or more, and the operation completion temperature (Mf point) at the time of cooling is set to less than 35°C. Therefore, in the example, the fighting temperature T is 35°C. It should be noted that by adjusting the blending ratio of shape memory alloys such as Ti (titanium) and Ni (nitzkel), it is possible to adjust the fighting temperature. It should be noted that the prototype size of the first coil spring 2 and the second coil spring 3 is longer than the extended state shown in FIG. 5.

The first coil spring 2 and the second coil spring 3 composed of such a shape memory alloy actively extend in the axial direction of the spring when the shape memory alloy is warmed to a temperature greater than or equal to the fighting temperature, and extend even when a force is applied from the axial direction. On the other hand, when the shape memory alloy cools to a temperature less than the battle temperature T, it weakens, actively extends in the axial direction of the spring without causing deformation and shrinkage, and shrinks when a force is applied from the axial direction. Thus, in the first coil spring 2 and the second coil spring 3, which are paired in series in the left and right directions, when the first coil spring 2 is warmed above the fighting temperature T and the second coil spring 3 is cooled below the fighting temperature T, the first coil spring 2 extends and the second coil spring 3 is pushed against the first coil spring 2 to shrink. On the other hand, when the second coil spring 3 is warmed above the bucket temperature and the first coil spring 2 is cooled below the bucket temperature, the second coil spring 3 extends and the first coil spring 2 is pushed against the second coil spring 3 to shrink.

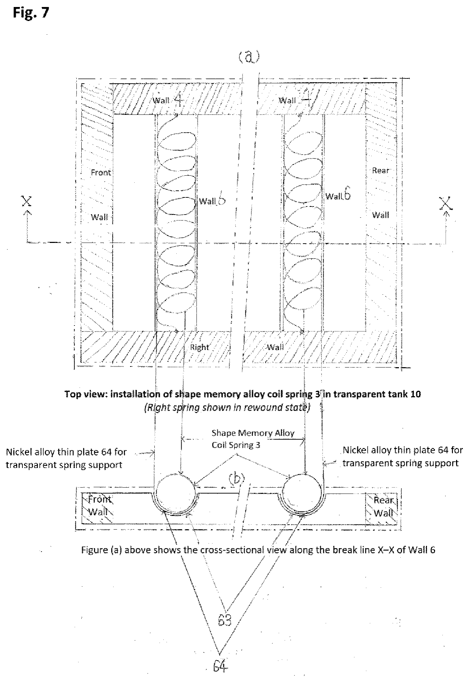

Since the first coil springs 2 and the second coil springs 3 are arranged in the inner space of the sealing groove 1 that forms a rectangle, it is possible to prevent the distortions of (1) to (3) described in paragraph [0 0 6] from occurring in the first coil springs 2 and the second coil springs 3.
First of all, with regard to the distortion in paragraph [0 0 0 6] (1), since the expansion and contraction of the first coil spring 2 and the second coil spring 3 is carried out in the internal space of the sealing groove 1, it means that even in the expansion and contraction, it is not obstructed by the left and right walls of the sealing groove 1 and the first partition wall 4 to extend or contract excessively. For example, if the length at the time of extension is 35 cm and the length at the time of shrinkage is 15 c m, it becomes horizontal 50 c m, but if the thickness of the first partition wall 4 to which the first coil spring 2 and the second coil spring 3 are attached is 3 cm, it means that the horizontal (the distance between the left and right walls of the inner wall) becomes a sealed groove of 53 c m.
Next, with regard to the distortion in (2) of paragraph [0 0 0 6], when the first coil spring 2 and the second coil spring 3 are warmed and extended, the third partition wall 6 is not only movable and supported from below while gently rubbing from below as the first coil spring 2 and the second coil spring 3 are extended, but also spring distortion prevention grooves 6 3 (semicircular grooves 63 in FIG. 6 and 7) formed on the upper surface of the third partition wall 6 cause the first coil spring 2 or the second coil spring 3 to stretch and contract, and not only does not deflect underneath, but also does not deflect to the left and right.
Furthermore, with respect to the distortion of (3) in paragraph [0 0 0 6], when the first coil spring 2 and the second coil spring 3 stretch and contract in the inner space of the sealing tank 1, the warm air of the second space R 2 and the cold air of the first space R 1 are blocked by the first to third partition walls 4, 5, 6, so that it is extremely rare for the warm air and the cold air to mix in the sealing tank 1. Thus, since the ceiling fan 29 vigorously rotates in the first space R1 and the floor fan 28 vigorously rotates in the second space R2, the temperature control of the cold air in the first space R1 and the warm air in the second space R2 is almost perfect (the cold air in the first space R1 is kept at a temperature less than or equal to the fighting temperature, and the warm air in the second space R2 is kept at a temperature greater than or equal to the fighting temperature T), the first coil spring 2 and the second coil spring 3 expand and contract in a timely manner.
As mentioned earlier, it is possible for the number of the first coil springs 2 and the second coil springs 3 that fall within the range of the first to third partition walls 4, 5, and 6 of the sealed groove 1, so that a large number of the first coil springs 2 and the second coil springs 3 can be used at the same time without distortion of (1) to (3).

### (About partition walls)

The sealing groove 1 of the example comprises the aforementioned first partition wall 4, the second partition wall 5, and the third partition wall 6 in order to partition the inside of the sealing groove 1 into the first space R1 and the second space R2. The first partition wall 4 divides the area in the aforementioned sealed tank 1 from side to side. This first partition wall 4 is provided with a protrusion 4a that stands vertically in the interior of the sealing tank 1 at a position where the distance from the upper and lower inner walls is, for example, 11 c m, and slides into the first guide groove 60 of the inner wall of the front wall and the back wall in the upper and lower middle, for example, at a length of 2 c m and a depth of 3 cm, and moves left and right in accordance with the extension deformation and weakening of the first coil spring 2 and the second coil spring 3.

The second partition wall 5 moves directly above the vertically standing first partition wall 4 while integrating with the first partition wall 4 and sliding horizontally to the left and right without gaps (at this time, the surface contacting the sealing groove 1 slides into the second guide groove 61 of the inner walls of the front wall and the rear wall, for example, 1 cm or more). The second partition wall 5 is, for example, a plate-like wall with a vertical (thickness) of 3 c m, a horizontal of 12.2 c m, and a depth of 26 c m. The second partition wall 5 is the left shrunk first!When the coil spring 2 extends to the right, it moves, for example, 31.4 cm from the left side to the right side, covering the compressed and contracted second coil spring 3 on the right side from above, and creating a gap, for example, 3 0.4 cm above the extended first coil spring 2 on the left side. Conversely, when the right collapsed second coil spring 3 extends to the left, it now moves from the right to the left, for example 31.40 cm, covering the compressed and collapsed left first coil spring 2 from above, and creating a gap, for example 3 0.4 c m above the extended right second coil spring 3. Since this second partition wall 5 needs to move in unison with the first partition wall 4, it needs to be fixed with the first partition wall 4. Its position is 30 on the upper side of the first partition wall 4!pinched in the middle and fixed to the length of the left and right equal distance.

The third partition wall 6 faces the second partition wall 5 from below and moves while sliding horizontally directly below the first partition wall 4 without gaps to the left and right (at this time, the surface contacting the sealing groove 1 slides by inserting 1 cm or more into the third guide groove 62 of the inner walls of the front wall and the rear wall). The third partition wall 6 is, for example, a plate-like wall having a length (thickness) of 3 c m, a width of 39 cm, and a depth of 26 c m. When the collapsed first coil spring 2 on the left side of the first partition wall 4 extends to the right, the third partition wall 6 moves from right to left, covering the collapsed (weakened) first coil spring 2 on the left side from the bottom, while rubbing under the rightwardly extending first coil spring 2, creating a gap of, for example, 3. 6 cm below the collapsed (weakened) second coil spring 3 on the right side. Conversely, as the right shrinking second coil spring 3 extends to the left, the third partition wall 6 now moves from the left to the right, for example 4. 6 cm, covering the right shrinking second coil spring 3 from underneath, exactly as described above, and creating a gap, for example 3. 6 cm, under the left shrinking (weakened) first coil spring 2.

### (About the spring distortion prevention groove 63)

On the upper surface of the third partition wall 6, as shown in Fig. 7, a spring distortion prevention groove 63 is provided at a position facing each first coil spring 2 and each second coil spring 3. This anti-spring groove 63 is formed as a groove that extends in the longitudinal direction of the first coil spring 2 and the second coil spring 3 and is semi-circularly recessed downward. And the spring distortion prevention groove 63 is provided to slide from below in a state in which the first coil spring 2 and the second coil spring 3 are extended (the state of Fig. 7 (2)), which intersects the extension direction of the helical first coil spring 2 and the second coil spring 3. Then, in the state where the first coil spring 2 is extended, a part of the lower part of the first coil spring 2 comes into contact with the spring distortion prevention groove 63, and in the state where the second coil spring 3 is extended, a part of the lower part of the second coil spring 3 comes into contact with the spring distortion prevention groove 63. This may prevent distortion of (2) described in paragraph [0006] from occurring. On the concave surface of the spring distortion prevention groove 63, a thin sheet 64 made of aluminum alloy is provided, and the first coil spring 2 and the second coil spring 3 do not contact the thin sheet 64 and stretch.

The first partition wall 4, the second partition wall 5, and the third partition wall 6 are all partition walls that simultaneously move based on the power generated when the first coil spring 2 and the second coil spring 3 expand and contract, but the mechanism shown in FIG. 5 is necessary for this to move accurately. The drawing in the upper section (2) of FIG. 5 shows that the first partition wall 4 moves from left to right, and when the first partition wall 4 moves from left to right by 31.4 cm, the second partition wall 5 also moves from left to right, but the third partition wall 6 can only move from right to left by 4.6 cm. The difference is 26.8 cm. Therefore, the string I forming the loop needs to have a slack of 2 6.8 c m. This is the exact same way when the second coil spring 3 is about to extend from right to left, as also shown in the lower section (b) of Figure 5.

Next, the mechanism by which the first partition wall 4 and the second partition wall 5 and the third partition wall 6 move in opposite directions will be described. Here, the first partition wall 4 and the second partition wall 5 stick together and move in the same direction at the same time, so the illustration of the second partition wall 5 was omitted. The view in the upper section (2) of FIG. 5 takes the midpoint of the depth of the first partition wall 4 to A at a height of 1 cm from the bottom surface of the left side of the wall, and to D (for example, 1 cm from the bottom surface) at a position opposite to it, and the third partition wall 6 also takes the midpoint of the depth to the left and right of the wall, for example, at a height of 1 c m from the bottom surface of the wall, and forms a loop link connecting the four points of A, B, C, and D as B, C. At this time, A and D are fixed at points, and B and C are installed with mini rollers. Then, when the first partition wall 4 tries to move from left to right by 31.4 cm, the third partition wall 6 is pulled to the movement of the fixed point A of the string I and tries to move from right to left in the reverse direction by 4.6 cm, as shown in Fig. 5 (a).

Next, the drawing in the lower section (b) of FIG. 5 is a diagram showing the state of the first partition wall 4 when it tries to move from right to left, and now when the first partition wall 4 tries to move from right to left by 31.4 cm, the third partition wall 6 is pulled to the movement of the fixed point D of the string I and tries to move from left to right by 4. 6 cm. When the second coil spring 3 extends from right to left by 31.4 cm, the first partition wall 4 and the second partition wall 5 also move from right to left by 31.4 cm. At this time, the horizontal length of the third partition wall 6 is 39 cm, and only 4.6 cm can be moved from left to right. This is due to the size of the third partition wall 6. In the third partition wall 6, when the second coil spring 3 extends to the max, it is necessary to block the heat from the bottom, so it has become its size because it is necessary to cover it from the bottom according to the length of the extension. This is also the case when the first coil spring 2 extends to the max.

When the first coil spring 2 and the second coil spring 3 stretch and contract, the air temperature of the second space R2 inside the rectangular sealing tank 1 must always be kept at a temperature greater than or equal to the predetermined fighting temperature T, and the air temperature of the first space R1 inside the sealing tank 1 must always be kept at a temperature lower than the predetermined fighting temperature T, so that the sealing tank 1 needs to be sealed. Also, since it is desirable that the air of the first space R1 and the air of the second space R2 do not leak into the other space, it is also necessary to ensure the sealing of the walls separating the two spaces R1 and R2. Also, the first partition wall 4 and the second partition wall 5 and the third partition wall 6 are movable according to the expansion and contraction of the first coil spring 2 and the second coil spring 3, and three walls are required because the first coil spring 2 and the second coil spring 3 need to be efficiently warmed or cooled. That is, the power generation device C U of the example is held at a temperature below the bucket temperature T by the ultra-compact high-performance chiller (first temperature control means) 9 and the ceiling fan 29, and the second space R 2 is held at a temperature above the bucket temperature T by the small high-performance electric heating heater (second temperature control means) 8 and the floor fan 28. Then, in the state in which the first partition wall 4 is moved to one side (the left side) in the sealed groove 1 (the state of the upper stage (2) of Fig. 5), the expanded and deformed second coil spring 3 is located in the first space R1, and the weakened, compressed and contracted first coil spring 2 is located in the second space R2. As a result, the second coil spring 3, which has been extended and deformed to a temperature higher than the fighting temperature T, is immediately cooled to less than the fighting temperature T by being located in the cold first space R1, which makes it possible to weaken and compress and shrink. On the other hand, the first coil spring 2, cooled, weakened, compressed and shrunk to less than the fighting temperature T, is instantly warmed to more than the fighting temperature T by being located in the warm second space R2, which causes it to stretch and deform.

Also, in the state in which the first partition wall 4 is moved to the other side (right side) of the sealed groove 1 (in the lower stage (in the state of Fig. 5), the elongated and deformed first coil spring 2 is located in the first space R1. As a result, the first coil spring 2, which has been extended and deformed to a temperature higher than the fighting temperature, is immediately cooled to less than the fighting temperature T by being located in the cold first space R1, which makes it possible to weaken and compress and shrink. On the other hand, the second coil spring 3, which has been cooled, weakened, compressed and contracted below the fighting temperature T, is instantly warmed above the fighting temperature T by being located in the warm second space R2, thereby causing it to stretch and deform.

Accordingly, the switching of the first coil spring 2 from the elongated deformation state to the weakened state and from the weakened state to the elongated deformation state is continuously repeated, and the switching of the second coil spring 3 from the weakened state to the elongated deformation state and from the elongated deformation state to the weakened state is continuously repeated. This causes the first partition wall 4 to reciprocate between the position of the upper section (a) of Figure 5 and the position of the lower section (b) of Figure 5.

### (Temperature control)

Next, an electric heater (second temperature control means) 8 that warms the air in the second space R2 of the sealed tank 1 and a chiller (first temperature control means) 9 that cools the air in the first space ^ 1 will be described. First, the electric heater 8 is mounted on the central part of the lower wall top surface (inner surface) of the sealed tank 1 and is located in the second space R2. The electric heater 8 is a heater that automatically maintains its set temperature after setting the temperature. The electric heater 8 keeps the second space R2 (an enclosed space formed by the inner wall of the bottom of the enclosed tank 1 and the three walls of the first to third partition walls 4, 5, and 6) warm at all times. And the switch of the floor fan 28 and the electric heater 8 should always be turned on (this is always a state in which the warm air is blowing roughly in the second space R2). The temperature sensor (not shown) that detects the temperature in the second space R2 is installed in the sealed tank 1, and the operation of the electric heater 8 is controlled based on the detected temperature of the temperature sensor.

The chiller 9 is attached to the central portion of the upper wall underside (inner surface) of the sealed tank 1 and is located in the first space R1. The cooler 9 is a cooler that automatically maintains the set temperature after setting the temperature. The chiller 9 constantly cools the first space ^ 1 (the enclosed space formed by the inner wall of the ceiling of the enclosed tank 1 and the three walls of the first to third partition walls 4, 5, and 6). And the switch of the ceiling fan 29 and the chiller 9 should always be in the state (this is always a state in which the cold air is blowing roughly in the first space R1). The temperature sensor (not shown) for sensing the temperature in the first space R1 is installed in the sealed tank 1, and the operation of the chiller 9 is controlled based on the sensed temperature of the temperature sensor.

### (About round-trip transportation)

Next, the loop belt 16, which is a round-trip means of transportation, will be described. As can also be seen from FIG. 1, the loop belt 16 is a belt that integrates a chain-like belt 15 and a normal belt 14 (14a, 14b) connected to each end of the chain-like belt 15. The loop belt 16 is connected to the left side of the first partition wall 4 through holes provided in the left wall of the sealing tank 1 by 14 people of the normal belt on the one hand (left side), and to the right side of the first partition wall 1 through holes provided in the right wall of the sealing tank 1 by the normal belt 14a, 14b on the other hand (right side), into the sealing tank 1 and connected to the right side of the first partition wall 4, forming a loop. Each normal belt 14a, 14b of this loop belt 16 is the same as the first and second coil springs 2, 3 sandwiched between the first partition wall 4.In a horizontal position, attach to the front and back center of the left and right walls of the first partition wall 4. In this way, the loop belt 16 attached to the first partition wall 4 will continue to move leftward and rightward in accordance with the continuous reciprocal movement of the first partition wall 4 in the left and right directions due to the expansion and contraction deformation of the first coil spring 2 and the second coil spring 3.

Further to the description of FIG. 1, the normal belt 14 of the loop bell fixing 16 on the left side of the first partition wall 4 passes through the hole in the left wall of the sealing tank 1 (its position is the same horizontal position as the mounting position to the facing first partition wall 4) and is wrapped around the loop roller 13 installed outside the left wall of the sealing tank 1. In addition, the normal belt 148 of the loop belt 16 fixed on the right side of the first partition wall 4 passes through the hole in the right wall of the sealing tank 1 (the position is in the same horizontal position as the mounting position to the facing first partition wall 4) and is wrapped around the loop roller 11 installed outside the right wall of the sealing tank 1. Then, the chain-like belts 15 connected to the respective ordinary belts 14a, 14b drawn outward of the sealing groove 1 are engaged to curve against the teeth of the outer periphery of the first rotary body 41 of the rotary transmission mechanism 17 installed in connection with the rotor rotary axis 23.

In other words, when the first partition wall 4 moves to the right by deforming so that the first coil spring 2 extends and the second coil spring 3 is weakened, compressed and shrunk, the normal belt 14 of the loop bell deck 16 is pulled to the right, and the chain bell deck 15 moves to the left (left) in FIG. 1. In addition, when the first partition wall 4 moves to the left, the ordinary belt 14b of the loop belt 16 is pulled to the left so that the chain belt 15 moves to the right (rightward movement) in FIG. 1 by deforming the second coil spring 3 to extend, weakening, compressing and shrinking the first coil spring 2. Therefore, by alternately performing the elongation deformation of the first coil spring 2 and the weakening of the second coil spring 3, the weakening of the first coil spring 2 and the elongation deformation of the second coil spring 3, the first partition wall 4 continuously moves back and forth, and the loop bell fix 16 continuously repeats the leftward movement and the rightward movement alternately.

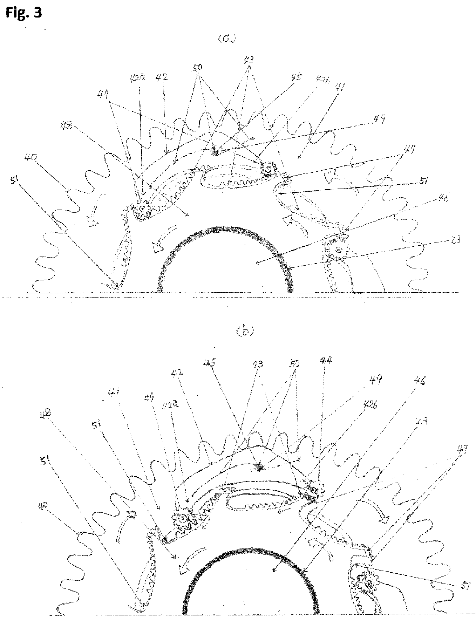

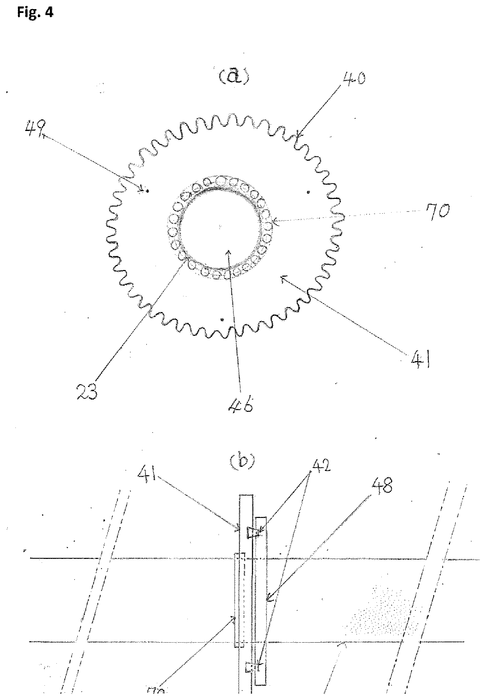

As shown in Figures 4 and 3, the rotary transmission mechanism 17 comprises a first rotary body 41 rotatably rotated alternately in a forward rotation direction and a reverse rotation direction opposite to the forward rotation direction by a loop belt 16 that is rotatably provided on the rotor rotary shaft 2 3 and functions as a driving means , a second rotary body 4 8 fixed to the rotor rotary shaft 23 in parallel with the first rotary body 41 and provided with a protruding part 4 7 and a rack gear 4 3 at an outer periphery, a pinion gear 4 4 that is oscillatably provided on the fulcrum shaft 4 9 fixed on the first rotary body 41, a lever 4 2 that can be hooked on the claw part 4 7 of the second rotary body 4 8, and a pinion gear 4 4 that is rotatably provided on the lever 4 2 and can be fitted on the rack gear 4 3. The lever 42 is constantly pressed by a torsion spring (biasing means) 50 that hangs on the protruding claw portion 47 of the rack gear 43 or mates with the rack gear 43. When the first rotary body 41 rotates in the forward rotation direction, the pinion gear 4 4 is caught in the protruding claw portion 4 7, so that the second rotary body 48 and the rotor rotary shaft 23 rotate in the same forward rotation direction as the first rotary body 41. On the other hand, when the first rotary body 41 is rotated in the reverse direction, the pinion gear 44 that is engaged with the rack gear 43 rotates, and the rotation of the pinion gear 44 causes the second rotary body 48 and the rotor rotary shaft 23 to rotate in the forward direction. That is, the first rotary body 41 rotates alternately in a forward rotation direction and a reverse rotation direction, but the second rotary body 48 and the rotor rotary shaft 23 are always configured to continuously rotate in one direction in the forward rotation direction.

The rotation transmission mechanism 17 comprises a first rotation transmission means 42 that rotates the rotor rotation axis (rotation axis) 23 in one direction when the reciprocating movement means 16 moves in the first direction (Fig. 3 (a)) and a second rotation transmission means 4 4 that rotates the rotation axis 23 in the same direction as described above when the reciprocating movement means 16 moves in a second direction opposite to the first direction (Fig. 3 (b)), as shown in Fig. 3. In the following description of the rotary transmission mechanism 17, in FIG. 3, the left rotation of the first rotary body 41 and the second rotary body 48 is taken as rotation in the forward rotation direction, and the right rotation is taken as rotation in the reverse rotation direction.

A plurality of protruding claw portions 47 are provided at predetermined intervals in the circumferential direction about the rotor rotation axis 23 at the outer periphery of the second rotary body 48, and a rack gear 43 is provided between each protruding claw portion 47. A lever 42 provided with a pinion gear 4 4 is provided in the first rotary body 41 so as to surround the second rotary body 48. Accordingly, during the forward rotation of the first rotation body 41, each pinion gear 4 4 is attracted to the protruding claw portion 47, and during the reverse rotation of the first rotation body 41, each pinion gear 4 4 sequentially engages with each rack gear 43 to rotate simultaneously and continuously, and the second rotation body 48 is rotated in the forward rotation direction due to the rotational inertia generated when each pinion gear 4 4 rotates. Hereinafter, it will be specifically described.

### (First rotating body 41)

The first rotary body 41 is formed in the form of _{a disc}, _{as shown in} _{Fig. 4} ₍ₐ), in the middle of which a hole 4 6 through which the rotor rotary shaft 23 penetrates is formed in the thickness direction thereof. The first rotating body 41 is attached to the rotor rotating shaft 23 by insertion of the rotor rotating shaft 23 into the hole 4 6, but the rotor rotating shaft 23 can be freely rotated by attaching the bearing bearing 70 to the rotating shaft 23 in a manner in contact with the second rotating shaft 48 fixed to the rotor rotating shaft 23 and attaching the first rotating shaft 41 above the bearing bearing 70, as shown in Fig. 4 (b) before attaching the first rotating body 41. That is, the first rotor 41 is smoothly rotatable in a forward or reverse direction regardless of the rotational direction of the rotor rotation axis 23. In addition, at the outer periphery of the first rotary body 41, teeth 40 are formed around the entire circumference in which the chain-like belt 15 of the loop belt 16 intermeshes, and the first rotary body 41 is a so-called sprocket. In addition, the end face of the first rotary body 41 is provided with a plurality (in the example, three) of fulcrum axes 49 at required intervals in the circumferential direction on the side face on the circumference of a predetermined diameter centered on the hole 4 6. On the fulcrum shaft 49, the lever 42 is mounted oscillatably.

### (About lever 42)

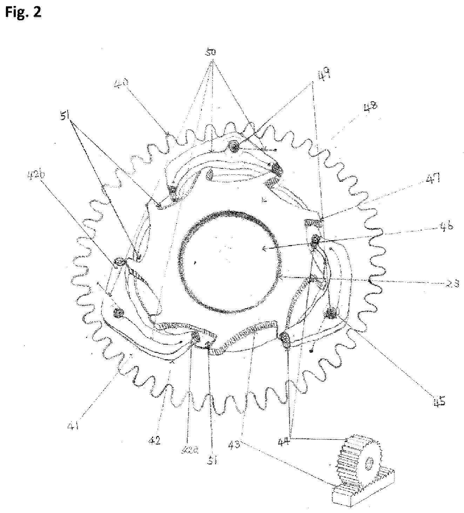

Each lever 42, which is oscillatably attached to the three fulcrum shafts 49 provided on the end face of the first rotary body 41 , is a seesaw type formed in a shape of approximately "to", as shown in FIG. 2, and a hole through which the fulcrum shaft 49 penetrates in the thickness direction is formed in the bent portion located in the middle of the longitudinal direction. The lever 42 is attached to the fulcrum shaft 49 by inserting the fulcrum shaft 49 into the hole, and the attitude is displaced so that one tip 42 and the other tip 42 are close to or away from the outer edge of the second rotary body 48. That is, the lever 42 oscillates so that when one tip 42 approaches the outer edge of the second rotary body 48, the other tip 42 moves away from the outer edge of the second rotary body 48, and when the other tip 42 moves away from the outer edge of the second rotary body 48, the other tip 42 moves away from the outer edge of the second rotary body 48. Then, the pinion gears 44, 4 4 are rotatably attached to each of the tip 42 of one of the levers 42 and the tip 42 of the other. That is, two pinion gears 44, 4 4 are attached to one lever 42.

### (About torsion spring 50)

Each fulcrum shaft 49 is fitted with a torsion spring 50 as a biasing means. The torsion spring 50 comprises an annular portion attached to the fulcrum shaft 49 and two legs extending from the annular portion, the tip of one leg being fixed to the end face of the first rotary body 41 and the tip of the other leg being fixed to the lever 42. Then, the torsional thread 50 constantly pushes the lever 42 in a direction where the other leg fixed to the lever 42 and one tip 42 of the lever 42 approaches the outer edge of the second rotary body 48. Accordingly, the oscillation of the lever 42 causes at least one of the pinion gears 44, 4 4 attached to the lever 42 to contact the tab portion 47 or the rack gear 43 of the second rotary body 48. Here, the pressing force of the torsion spring 50 is set to a strength that allows the posture of the lever 42 to be displaced so that one tip 42 side of the lever 42 is away from the outer edge of the second rotary body 48 and the other tip 42 side of the lever 42 is close to the outer edge of the second rotary body 48 when the pinion gear 4 4 4 of the lever 42 is positioned on the protruding claw portion 47 provided on the outer edge of the second rotary body 48.

### (About pinion gear 4 4)

Each pinion gear 4 4, 4 4 attached to one tip 42 and the other tip 42 of each lever 42 is formed around the entire peripheral surface with teeth of the same module as the teeth of the rack gear 43 provided in the second rotary body 48, and is capable of intermeshing with this rack gear 43. Since each pinion gear 4 4 is desired to rotate at high speed, for example, a small diameter with a diameter of 10 mm to 20 mm is employed. In addition, each pinion gear 44 is formed of a material with a high specific gravity, and the rotational inertia force is increased according to the rotational speed. Here, it is desirable that each pinion gear 44 be formed of a ferrous metal, such as steel, alloy steel, carbon steel, cast iron, and the like.

### (About the second rotating body 48)

The second rotary body 48 is formed in the form of a plate of the same thickness as the first rotary body 41, as shown in FIG. 4, in the middle of which a hole 4 6 through which the rotor rotary shaft 23 is inserted is formed in the thickness direction thereof. The second rotating body 48 is mounted so as to be fixed to the rotor rotating shaft 23 by insertion of the rotor rotating shaft 23 into the hole 4 6, and is unable to rotate freely with respect to the rotor rotating shaft 23. That is, the second rotating body 48 is always rotated in the forward direction in unison with the rotor rotating shaft 23. In the outer periphery of the second rotary body 48, a plurality (9 in the example) of protruding claw portions 47 are provided at equal intervals in the circumferential direction, and the portion between each protruding claw portion 47 is a concave curved portion that is relatively concave in the radial direction. Each concave curve positioned between each protruding claw portion 47 has a concave portion 51 formed on one side of the protruding claw portion 47 (forward rotation direction) and a gentle concave curve on the other side of the protruding claw portion 47 (reverse rotation direction).

### (About recess 51)

Each recess 51 can be fitted with a pinion gear 4 4 provided on one tip 42 of the lever 42, as shown in FIG. 3. In addition, the pinion gear 4 4 provided on the other tip 42 of the lever 42 is not fitted in each recess 51. Each recess 51 has a concave arc-shaped undercut form that opens in the reverse direction of the second rotary body 48 and is concave in the forward direction of the second rotary body 48, as is evident from FIG. 2. Then, each recess 51 is formed in a shape and size in which a pinion gear 44 4 provided in one tip 42 of the lever 42 provided in the first rotary body 41 can fit. This causes the pinion gear 44 provided at the tip 42 of one of the levers 42 to move towards and fit into the recess 51 when the first rotary body 41 rotates relative to the second rotary body 48 in the forward direction. Then, in the state where the pinion gear 44 is engaged in the recess 51 (Fig. 3 (a)), the rotation of the first rotation body 41 in the forward rotation direction is restricted to be faster than the rotation of the second rotation body 48 in the forward rotation direction, and the second rotation body 48 and the first rotation body 41 can rotate in the forward rotation direction in synchronization. In addition, when the first rotating body 41 rotates relative to the second rotating body 48 in the reverse direction while the pinion gear 44 is engaged in the recess 51, the pinion gear 44 will escape from the recess 51 in the reverse direction, enabling rotation of the first rotating body 41 in the reverse direction.

### (About Rack Gear 43)

Each rack gear 43 is the same set of teeth as the modulus of the pinion gear 44 provided in each lever 42, and this pinion gear 44 can be intermeshed. The rack gear 43 is formed in a concave curve between each protruding claw portion 47 on the outer peripheral surface of the second rotary body 48. Accordingly, as shown in FIG. 2, due to the relative positional relationship between the first rotary body 41 and the second rotary body 48, when the pinion gear 4 4 provided on one tip 42a of the lever 42 is mated with the rack gear 4 3 of the second rotary body 48, the pinion gear 4 4 provided on the other tip 42b will be separated from the second rotary body 48. Then, when the pinion gear 4 4 provided in the tip 42 of one of the levers 42 is located in the protruding claw portion 47 of the second rotary body 48, the posture of the lever 42 is displaced, and the pinion gear 44 provided in the other tip 42b approaches the second rotary body 48 to mate with the rack gear 43. In addition, when the pinion gear 4 4 provided in the other tip portion 42 of the lever 42 is located in the protruding claw portion 47 of the second rotary body 48, the posture of the lever 42 is displaced, and the pinion gear 4 4 provided in the one tip portion 42 approaches the second rotary body 48 to mate with the rack gear 43. Then, each pinion gear 4 4 rotates to the right in FIG. 3 (b) when the first rotating body 41 is rotated in a relative reverse direction (right rotation) with respect to the second rotating body 48 while being in contact with the rack gear 4 3.

### (Regarding the rotation clamping of the second rotating body 48 in the forward direction by the pinion gear 4 4)

Since each pinion gear 44 is formed of a material with a high specific gravity, as mentioned earlier, rotational inertia occurs when rotating right at high speed in FIG. 3 (b). Each pinion gear 44 that generates a rotational inertia card by rotating to the right at a high speed generates a card that kicks out the teeth of the rack gear 43 that is mating. That is, each pinion gear 4 4 kicks out the rack gear 4 3, giving the second rotor 48 a forward rotation (left rotation). In other words, when the first rotary body 41 rotates in the reverse direction (right rotation) with respect to the second rotary body 48, the second rotary body 48 may be rotated in the forward direction (left rotation) because the force of the teeth of each pinion gear 4 4 kicking out the teeth of the rack gear 4 3 occurs in each pinion gear 4 4.

The rotary transmission mechanism 17 configured as described above is adjacent to a first rotary body 41 rotatably provided on the rotor rotary shaft 23 and a second rotary body 48 fixed on the rotor rotary shaft 23 in the axial direction of the rotor rotary shaft 23. The first rotating body 41 then continuously rotates in an alternating forward and reverse direction relative to the rotor rotating axis 23 in conjunction with the leftward and rightward movement of the chain-like belt 15 of the loop belt 16.

### (When the first rotating body 41 rotates in the forward direction)

As shown in Fig. 3 (a), when the chain-like belt 15 of the loop belt 16 moves to the left, the first rotary body 41 will rotate in the forward direction (left rotation), and the pinion gear 4 4 provided at the tip 42a of one of the levers 42 pressed by the torsion spring 50 will fit into the recess 51 of the second rotary body 48. The pinion gear 4 4 embedded in the recess 51 cannot escape from the recess 51 while the first rotating body 41 rotates in the forward direction. This causes the rotor rotation shaft 23, on which the second rotor 48 is fixed, to continuously rotate in one direction (the forward rotation direction) by being pushed against the first rotor 41 rotating in the forward rotation direction so that the second rotor 48 rotates synchronously and at the same rotational speed in the forward rotation direction.

### (When the first rotating body 41 rotates in the reverse direction)

On the other hand, when the chain-like belt 15 of the loop belt 16 moves to the right as shown in Fig. 3 (b), the first rotary body 41 will rotate in the reverse direction (right rotation), and the pinion gear 4 4 provided on one tip 42 of each lever 42 pressed by the torsion spring 50 will fit into the rack gear 43 of the second rotary body 48. Then, by rotating the first rotating body 41 relative to the second rotating body 48 in the reverse direction (right rotation), each pinion gear 4 4 that is in contact with the rack gear 4 3 will rotate right at a high speed, and the rack gear 4 3 will be kicked out by each pinion gear 44 that rotates at a high speed. In addition, when the pinion gear 44 provided at the tip 42 of one of the levers 42 is positioned at the protruding claw portion 47 during the process of the first rotation body 41 rotating in a relatively reverse direction with respect to the second rotation body 48 , the posture of the lever 42 is displaced, so that the pinion gear 44 provided at the other tip 42 seat is rotated at a high speed in line with the rack gear 4 3. This causes the second rotary body 48 in which the rack gear 43 is formed to rotate in the forward rotational direction by the rotational inertia cams of each of the pinion gears 44, 44, so that the rotor rotary shaft 23 on which the second rotary body 48 is fixed continuously rotates in one direction (forward rotational direction).

Thus, the rotation transmission mechanism 17 of the example will continuously rotate the second rotation body 48 in the forward rotation direction when the first rotation body 41 rotates in the forward rotation direction, and the second rotation body 48 will continuously rotate in the forward rotation direction when the first rotation body 41 rotates in the reverse rotation direction, so that the rotor rotation shaft 23 on which the second rotation body 48 is fixed will always continuously (continuously) rotate in one direction in the forward rotation direction. That is, even if the first rotating body 41 rotates alternately in the forward and reverse directions, the second rotating body 48 will always continuously rotate in one direction in the forward rotating direction, and the rotor rotating shaft 23 can also continuously rotate in the forward rotating direction to achieve continuous power generation of the generator 20.

### (About generator 20)

The generator 20 is already known to be used in practical applications, and detailed descriptions are omitted here. The generator 20 is composed of a rotor rotary shaft 23, a rotor 21 fixed to the rotor rotary shaft 23, and a coil layer 19 mounted on a bearing bearing 26 fixed to the rotor rotary shaft 23 in a manner surrounding the rotor 21, as shown in FIG. 1. This structure is the same as the bicycle magnet generator, and when the rotor 21, which is a magnet layer, is rotated, electricity is generated in the coil layer 19 surrounding it.

### (Action of Examples)

Next, it will be described how the power generation device CU of the example configured as described above actually operates to realize power generation.

The power generation device C U is in the initial state (inactive state), for example, the state of Figure 5 (a). That is, the first coil spring 2 is contracting and the second coil spring 3 is extending. As a result, the first partition wall 4 is stopped at a position close to the left wall of the sealed tank 1, and the second partition wall 5 is stopped at a position in contact with the left wall. In addition, the third partition wall 6 stops at a position where it contacts the right wall. Then, in the first space R1 of the sealing groove 1, the extended second coil spring 3 is located, and in the second space R2, the collapsed first coil spring 2 is located. In the initial state, both in the first space R1 and in the second space R2 are held at temperatures below the battle temperature T, the second coil spring 3 is weakened while remaining extended, the first coil spring 2 is weakened while remaining collapsed, and the first coil spring 2 and the second coil spring 3 do not grow.

If the main switch (not shown) of the power generation device CU that is stopped in the initial state is O N, electricity is supplied from the pre-charged storage battery 27 to each of the electric heating heater 8, the chiller 9, the floor fan 28, and the ceiling fan 29. Accordingly, the air in the first space R1 of the sealed tank 1 is convected by the ceiling fan 29 and gradually cooled by the chiller 9. Then, the air in the first space R1 becomes cold air cooled to a temperature below the battle temperature T after the required time, and the entire air in the first space R1 is maintained below the battle temperature T. On the other hand, the air in the second space R2 of the sealed tank 1 is convected by the floor fan 28 and gradually warmed by the electric heater 8. Then, the air in the second space R2 is heated to a temperature greater than or equal to the fighting temperature T after the required time, and the entire air in the second space R2 is maintained at a temperature greater than or equal to the fighting temperature T.

By cooling the first space R1 in the sealed tank 1 to a temperature less than the battle temperature T, the second coil spring 3, which was located in the extended first space R1, is maintained in a cooled state to a temperature less than the battle temperature T, and is maintained in a weakened state without an elongating force. On the other hand, since the second space R2 in the sealed tank 1 is warmed to a temperature greater than or equal to the fighting temperature T, the first coil spring 2, which was located in the second space R2 while shrinking and weakening, is warmed to a temperature greater than or equal to the fighting temperature T, so that an elongating force is generated.

This allows the second coil spring 3 to weaken and shrink.
allows the first coil spring 2 to extend, and due to the extension deformation of the first coil spring 2 and the compression deformation of the second coil spring 3, the first partition wall 4 and the second partition wall 5 are pushed in the right direction, and the first partition wall 4 and the second partition wall 5 slide along the first and second guide grooves 60, 61 in the right direction.

As the first partition wall 4 and the second partition wall 5 slide along the guide grooves 60, 61 in the right direction, the third partition wall 6 stops in contact with the right wall of the sealing tank 1 until the aforementioned string I that forms the loop protrudes. Then, the third section cutting wall 6 moves to the left along the third guide groove 6 2 after the string I is protruded. Then, at the timing when the second partition wall 5 contacts the right wall of the sealing tank 1, the first partition wall 4 and the second partition wall 5 stop, and the third partition wall 6 stops at the timing when it contacts the left wall of the sealing tank 1. This almost maintains the partition state of the first space R1 and the second space R2 by the first to third partition walls 4, 5, 6.

When the second partition wall 5 hits the right wall of the sealing tank 1 and the third partition wall 6 hits the left wall of the sealing tank 1 (Figure 5 (b)), the first coil spring 2, which was heated to a temperature above the fighting temperature T, will be located in the first space R1, which is cooled to a temperature below the fighting temperature T, so that the temperature below the fighting temperature T will be rapidly cooled and weakened. On the one hand, the second coil spring 3, which was cooled to a temperature lower than the fighting temperature T, will be located in the second space R2, which is warmed to a temperature higher than the fighting temperature T, so that it will be rapidly warmed to a temperature higher than the fighting temperature T, and a stretching force will be generated.

As a result, the first coil spring 2 can be weakened and contracted, so that the second coil spring 3 can be extended, and due to the extension deformation of the second coil spring 3 and the compression deformation of the first coil spring 2, the first partition wall 4 and the second partition wall 5 are pushed to the left, and the first partition wall 4 and the second partition wall 5 slide to the left along the first and second guide grooves 60, 61.

As the first partition wall 4 and the second partition wall 5 slide leftward along the guide grooves 60, 61, the third partition wall 6 is stopped in contact with the left wall of the sealing tank 1 until the aforementioned string I that forms the loop protrudes. Then, the third partition wall 6 moves to the right along the third guide groove 6 2 after the string I is protruded. Then, at the timing when the second partition wall 5 contacts the left wall of the sealing tank 1, the first partition wall 4 and the second partition wall 5 stop, and the third partition wall 6 stops at the timing when it contacts the right wall of the sealing tank 1. This almost maintains the partition state of the first space R1 and the second space R2 by the first to third partition walls 4, 5, 6.

Accordingly, the power generation device CU of the example maintains the temperature in the first space R1 of the sealed tank 1 at or below the fighting temperature, while maintaining the temperature in the second space R2 at or above the fighting temperature, so that the elongation deformation of the first coil spring 2 and the compression deformation of the second coil spring 3 and the elongation deformation of the second coil spring 3 and the compression deformation of the first coil spring 2 occur continuously alternately, thereby causing the first partition wall 4 and the second partition wall 5 to alternately continuously reciprocate in the left and right directions in the sealed tank 1.

It should be noted that when the first coil spring 2 and the second coil spring 3 are stretched and deformed, the lower portion is substantially fitted to the corresponding spring distortion prevention grooves 63, 63 on the lower side, so that the intermediate portions of these coil springs 2, 3 are regulated to be deflected and deformed downwardly, forwardly and backwardly intersecting with the expansion and retraction direction. Accordingly, the first coil spring 2 and the second coil spring 3 are stretched and deformed in a state in which the occurrence of the distortion of (2) described in paragraph [0 0 0 6] is regulated.

Along with the reciprocating slide movement in the left and right direction of the first partition wall 4 due to the alternating telescopic deformation of the first coil spring 2 and the second coil spring 3, the loop belt 16 connected to the first partition wall 4 and wrapped around the loop rollers 11, 13 moves leftward and rightward, and the chain-like belt 15 alternately repeats the leftward and rightward movements continuously. In other words, when the first partition wall 4 slides to the right in the sealing tank 1, the loop belt 16 moves to the left (left), and when the first partition wall 4 slides to the left in the sealing tank 1, the loop belt 16 moves to the right (right).

With the leftward and rightward movement of the chain-like belt 15 of the loop belt 16, in the rotary transmission mechanism 17 provided on the rotor rotary axis 23 of the generator 20, the first rotary body 41 to which the loop belt 16 is wound alternately and continuously repeats the rotation in the forward rotation direction and the reverse rotation direction about the rotor rotary axis 23. That is, when the loop belt 16 moves to the left, the first rotating body 41 rotates in the forward direction, which is rotated to the left in FIG. 3 (a), and when the loop belt 16 moves to the right, the first rotating body 41 rotates in the reverse direction, which is rotated to the right in FIG. 3 (b).

Here, in the rotary transmission mechanism 17, when the first rotary body 41 rotates in the forward rotation direction with the leftward movement of the chain-like belt 15 of the loop belt 16, a pinion gear 44 provided in one tip 42 of each lever 42 provided in the first rotary body 41 is inserted into any recess 51 provided in the second rotary body 48. This causes the second rotary body 48 to rotate in the forward direction at the same rotational speed as the first rotary body 41, pressed against the first rotary body 41, and rotate the rotor rotary shaft 23 on which the second rotary body 48 is fixed in the forward direction.

On the other hand, when the first rotary body 41 rotates in the reverse direction with the right movement of the chain-like belt 15 of the loop belt 16, either the pinion gear 44 provided on one tip 42 of each lever 42 provided on the first rotary body 41 or the pinion gear 44 provided on the other tip 42 seat mates with the rack gear 43 provided on the second rotary body 48. Then, as the first rotating body 41 rotates in the reverse direction, the second rotating body 48 rotates in the forward direction relative to the first rotating body 41, at which time each pinion gear 4 4 that mates with the rack gear 43 rotates at a high speed to generate a rotational inertia. As a result, each rack gear 43 intermeshed with the pinion gear 4 4 is rotated at a high speed to push the second rotary body 48 in the forward rotation direction, so that the rotation of the second rotary body 48 in the forward rotation direction is maintained.

In other words, in the rotary transmission mechanism 17, either while the first rotary body 41 rotates in the forward rotation direction or while the first rotary body 41 rotates in the reverse rotation direction, the second rotary body 48 will continuously rotate in the forward rotation direction (rotate continuously in one direction), so that the rotor rotary shaft 23 will continuously rotate in the - direction. As the rotor rotation shaft 23 continuously rotates in one direction, the generator 20 is continuously driven to generate continuous power.

Part of the electricity generated by the operation of the generator 20 is to be supplied to the storage battery 27, and the storage battery 27 is to be constantly charged during the operation of the power generation device CU. This ensures that the supply of electricity to the electric heater 8, the chiller 9, the floor fan 2 8 and the ceiling fan 2 9 is not interrupted during the operation of the power generation device C U, that the temperature control of the first space R1 and the second space R2 of the sealed tank 1 is properly carried out, and that the first and second coil springs 2, 3 are stretched and deformed in an alternating manner, so that proper power generation is continuously carried out by the generator 20 as a result.

In this way, the power generator C U of the example is configured to react the first space R1 of the sealed tank 1 with a bucket temperature T not stable and continuous power generation is possible by maintaining the second space R2 at a full temperature while maintaining the second space R2 at a temperature greater than or equal to the bucket temperature T, since continuous stretching and shrinkage deformation of the first coil spring 2 and the second coil spring 3 occurs, which allows the generator 20 to be continuously operated via the looped belt 16 and the rotary transmission mechanism 17. In particular, since the temperature control of the first coil spring 2 and the second coil spring 3 can be appropriately performed, the first partition wall 4 and the looped belt 16 can be continuously reciprocated appropriately, thereby enabling the generator 20 to be driven stably and continuously. The rotary transmission mechanism 17 can also appropriately convert the reciprocating movement of the looped belt 16 into continuous rotation of the rotor rotary axis 23 in the same direction. It is also possible to regulate the occurrence of distortion during the deformation of the stretching and shrinking first coil springs 2 and the second coil springs 3, so that the repeated life of each coil springs 2 and 3 can be expected to be prolonged.

### (Example of change)

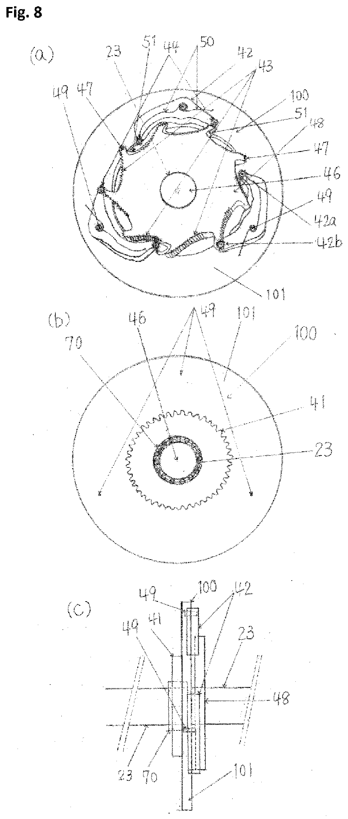

FIG. 8 is a diagram illustrating the rotary transmission mechanism 100 of the modified example. The difference between the rotary transmission mechanism 100 and the rotary transmission mechanism 17 of the example is that the outer diameter of the first rotary body 41 is smaller than the outer diameter of the second rotary body 48, and a circular support plate 101, which is larger than the outer diameter of the second rotary body 48, is provided between the first rotary body 41 and the second rotary body 48. Then, the fulcrum shaft 49 supporting the lever 42 is fixed to the side surface of the second rotary body 48 in the support plate 101. The support plate 101 is provided rotatably on the rotor rotation shaft 23 and is fixedly or integrally formed on the first rotation body 41, and is integrally rotated in a forward rotation direction and a reverse rotation direction with the first rotation body 41. That is, the support plate 101 only rotates integrally with the first rotating body 41, and does not rotate in the reverse direction or at different rotational speeds with the first rotating body 41.

Since the rotary transmission mechanism 100 of the modified example is configured to fix the fulcrum shaft 49 supporting the lever 42 to the support plate 101, it is possible to reduce the outer diameter of the first rotary body 41 to a smaller diameter than the outer diameter of the second rotary body 48 . Then, with the reduction of the diameter of the first rotary body 41, the rotation speed of the first rotary body 41 relative to the reciprocating movement of the looped belt 16 may be higher than the rotation transmission mechanism 17 of the example, so that the rotation of the second rotary body 48 and the rotor rotation axis 23 can be accelerated.

### (Example of Other Changes)

(1) In the examples, specific dimensions and sizes such as the sealed groove 1 are shown, but these dimensions and sizes are not limited thereto, and can be changed accordingly.
(2) The logarithm of the first coil spring 2 and the second coil spring 3 may be one pair or more than three pairs, not limited to the two pairs shown in the examples.
(3) The shape memory alloy forming each coil spring 2, 3 is not limited to the physical properties illustrated in the examples, and it is possible to adopt shape memory alloys with various physical properties.
(4) The installation of the pair of the first coil spring 2 and the second coil spring 3 is not limited horizontally, but may be vertical or may be inclined at a desired angle on the premise of changing the internal structure of the sealing groove 1.
(5) The rotary transmission mechanism 17 is not limited to the configuration illustrated in the example, but may be a configuration capable of converting a reciprocating movement into a one-way rotary movement.
(6) The third partition wall 6 may be a structure that slides with an actuation-controlled fluid pressure actuator, a motor, or the like. In this case, the cooperative structure by the string can be omitted.
(7) The reciprocating means of transport 16 is not limited to a loop-like belt with the chain-like belt shown in the example. For example, if the first rotary body 41 of the rotary transmission mechanism 17 is a toothed pulley provided with a tooth profile around the entire periphery, the reciprocating movement means 16 can be a toothed belt with an inner periphery formed with a tooth profile that fits the tooth profile of the first rotary body 41.
(8) The reciprocating movement means 16 may be provided in the form of an elongated rack gear that does not deform elastically, fixing one end in the longitudinal direction to the first partition wall 4 and extending outward from the opening provided in the wall portion of the sealing layer 1, and moving back and forth in conjunction with the reciprocating movement of the first partition wall 4. In this form, the first rotary body 41 of the rotary transmission mechanism 17 is taken as a spur gear (spur gear) that mates with the rack gear of the reciprocating means of movement 16 extending outside of the sealing layer 1, and the first rotary body 41 is taken as a form that mates with the reciprocating means of movement 16. Even in such a form, the reciprocating movement of the reciprocating movement means 16 in conjunction with the reciprocating movement of the first partition wall 4 causes the first rotary body 41 of the rotary transmission mechanism 17 to rotate reciprocally in the forward and reverse directions, obtaining an action equivalent to that of the example.
(9) The spring distortion prevention groove 63 as a spring distortion prevention part provided on the upper surface of the third partition wall 6 is not limited to the grooved form illustrated in the drawings and the above example. For example, a groove along the spring may not be provided on the upper surface of the third partition wall 6, and two protrusions extending in the longitudinal direction of the springs 2 and 3 may be provided on both sides of the first coil spring 2 and the second coil spring 3 in the short-hand direction. The spring distortion prevention groove 63 as the spring distortion prevention part of this modified example is surrounded by the upper surface of the third partition wall 6 and the outer surface of the two protrusions of the first coil spring 2 and the second coil spring 3, and the distortion of these springs 2 and 3 can be prevented.
(10) The generator 20 is not limited to that of the structure illustrated in the examples, and various forms of the known can be employed.
(11) A speed increasing mechanism may be provided between the rotor rotation axis 23 of the rotary transmission mechanism 17 and the generator 20 to increase the rotational speed of the generator 20 more than the rotational speed of the rotor rotation axis 23.

### Industrial applicability

If the power generation device CU is extremely compact and generates more than 10 units of power, it is possible to realize the dream of an electric vehicle by mounting this power generation device CU on a car.

### List of reference numerals:

- 1: Closed tank
- 2: First coil spring
- 3: Second coil spring
- 4: First partition wall
- 5: Second partition wall
- 6: Third partition wall
- 8: Electric heater (second temperature control means)
- 9: Cooler (1st temperature control unit)
- 16: Loop Belt (Round Trip)
- 17: Rotary Transmission Mechanism
- 20: Power Generator
- 23: Rotor Rotation Axis (rotation axis)
- 41: First Rotating Body
- 48: Second Rotating Body
- CU: Power Generator
- R1: First space
- R2: Secondary space
- T: Struggle Temperature

## Claims

1. A power generation device (CU) configured to generate electricity by driving the rotating shaft (23) of a generator (20), comprising:
a first partition wall (4) provided to be capable of reciprocating movement within a sealed tank (1) having an internal space formed therein;
a first coil spring (2) made of a shape memory alloy, with one end fixed to the inner wall of the sealed tank (1) and the other end connected to the first partition wall (4), which extends and deforms when heated above a predetermined threshold temperature (T) and weakens when cooled below the threshold temperature (T);
a second coil spring (3) also made of a shape memory alloy, positioned coaxially on the opposite side of the first coil spring (2) across the first partition wall (4), with one end fixed to the inner wall of the sealed tank (1) and the other end connected to the first partition wall (4), which extends and deforms when heated above the threshold temperature (T) and weakens when cooled below the threshold temperature (T);
a reciprocating means (16) connected to the first partition wall (4) and configured to reciprocate in accordance with the movement of the first partition wall (4); and
a rotation transmission mechanism (17) that links the reciprocating means (16) to the rotating shaft (23) and converts the reciprocating motion of the reciprocating means (16) into unidirectional rotation of the rotating shaft (23);
Inside the sealed tank (1), the following are provided:
the first partition wall (4) that reciprocates between a first position and a second position;
a second partition wall (5) fixed to the first partition wall (4), which reciprocates between the first and second positions along the directions in which both coil springs (2, 3) extend;
a third partition wall (6), located on the opposite side of the second partition wall (5) across the coil springs (2, 3), and reciprocates along the same direction;
These partition walls (4, 5, 6) divide the interior of the sealed tank (1) into:
a first space (R1) maintained at a temperature below the threshold temperature (T), and
a second space (R2) maintained at a temperature above the threshold temperature (T).
Due to the extension and deformation of the first coil spring (2) and the weakening and compression of the second coil spring (3), the first and second partition walls (4, 5) move from the first position to the second position, while the third partition wall (6) moves from the second position to the first position. The deformed first coil spring (2) is cooled in the first space (R1), while the weakened and compressed second coil spring (3) is heated in the second space (R2). Subsequently, due to the extension and deformation of the second coil spring (3) and the weakening and compression of the first coil spring (2), the first and second partition walls (4, 5) move from the second position to the first position, and the third partition wall (6) moves from the first position to the second position. Thus, the deformed second coil spring (3) is positioned in the first space (R1), and the weakened and compressed first coil spring (2) is positioned in the second space (R2).
By alternately performing the extension and deformation of the first coil spring (2) and the weakening and compression of the second coil spring (3), and vice versa, the first partition wall (4) reciprocates between the first and second positions. This movement causes the reciprocating means (16) to move back and forth, and the rotation shaft (23) of the rotation transmission mechanism (17) to continuously rotate in one direction, thereby enabling continuous power generation by the generator (20).

2. The power generation device according to anyone of claim 1 or 2, wherein in the first space (R1), a first temperature control means (9) that maintains the air below the threshold temperature (T) and a ceiling fan (29) for forced circulation are provided.
In the second space (R2), a second temperature control means (8) that maintain the air above the threshold temperature (T) and a floor-mounted fan (28) for forced circulation are provided. The sliding directions of the first and second partition walls (4, 5) and the third partition wall (6) are configured to be opposite to each other.
When the second partition wall (5) is at the first position, it is located on the first space (R1) side of the first coil spring (2), positioning the first coil spring (2) in the second space (R2);
when the third partition wall (6) is at the second position, it is located on the second space (R2) side of the second coil spring (3), positioning the second coil spring (3) in the first space (R1); when the second partition wall (5) is at the second position, it is located on the first space (R1) side of the second coil spring (3), positioning the second coil spring (3) in the second space (R2);
when the third partition wall (6) is at the first position, it is located on the second space (R2) side of the first coil spring (2), positioning the first coil spring (2) in the first space (R1).

3. The power generation device of claim 1, wherein the rotation transmission mechanism (17) comprises:
a first rotating body (41), rotatably attached to the rotating shaft (23) and linked to the reciprocating means (16);
a second rotating body (48), directly fixed to the rotating shaft (23) adjacent to the first rotating body (41) and rotating integrally with the shaft (23);
a pinion gear (44), movably provided on the first rotating body (41), which is capable of rotating during movement;
a concave portion (51), provided on the second rotating body (48), in which the pinion gear (44) can engage when the reciprocating means (16) moves in a first direction;
a rack gear (43), provided on the second rotating body (48), with which the pinion gear (44) engages when the reciprocating means (16) moves in a second direction;
When the reciprocating means (16) moves in the first direction, the pinion gear (44) fits into the concave portion (51), causing the second rotating body (48) to rotate in the same first direction as the first rotating body (41).
When the reciprocating means (16) moves in the second direction, the pinion gear (44) meshes with the rack gear (43), and the rotational inertial force generated in the pinion gear (44) continuously rotates the second rotating body (48) in the first direction.
